**Europäisches Patentamt**

**European Patent Office**

**Office européen des brevets**

(19)

(11) **EP 1 104 905 A1**

(12) **EUROPEAN PATENT APPLICATION**

(43) Date of publication:
**06.06.2001 Bulletin 2001/23**

(51) Int Cl.⁷: **G06F 17/60**

(21) Application number: **99120982.6**

(22) Date of filing: **09.11.1999**

| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Zeinecker Christoph**<br>  **20146 Hamburg (DE)**<br>• **Cullinane Scott**<br>  **81667 München (DE)** |
|---|---|
| (71) Applicant: **gaudia.com GmbH**<br>**20095 Hamburg (DE)** | (74) Representative: **Dokter, Eric-Michael**<br>**Hofangerstrasse 56**<br>**81735 München (DE)** |

(54) **A system, method and computer program for defining products**

(57) A system for defining at least one product by a first client computer (101) on at least one server computer (108) and requesting the product by a second client computer (102), from the server computer (108),
the first client computer (101) and the second client computer (102) being interactively connected to the server computer (108) via a communication network (105),
comprises the following components:

a) an object-oriented database (112),
b) the server computer (108) comprising an interface (109) which is interactively connected to the object-oriented database (112), to the first client computer (101), as well as to the second client computer (102), the computer server (108) or the interface (109) comprising:

- a means for receiving database objects of the product, which are defined and sent by the first client computer (101),
- a means for receiving instructions for possibilities of constructing the product including the database objects, which are defined and sent by the first client computer (101),
- a means for storing the database objects and the corresponding instructions for the product in the object-oriented database (112),
- a means for creating a requested product according to a request sent from the second client computer, using the database objects and the instructions,

- a means for presenting the requested product to the second client computer.

FIG 1

**Description**

BACKGROUND OF THE INVENTION

This invention relates to a system, a method, and a computer program element for defining at least one product by a first client computer on at least one server computer and requesting the product by a second client computer, from the server computer, the first client computer and the second client computer being interactively connected to the server computer via a communication network.

During the last few years, internet shopping, and especially internet ticketing becomes increasingly important, as it enhances the convenience and flexibility of shopping.

In [1], there can be found an internet ticketing system. With this internet ticketing system, a promoter may offer tickets for an event he organizes. After having been registered in the provider's server computer, the promoter may add an event, he wants to offer tickets for, to a server computer's database. To do this, he is using a client computer which is connected with the server computer via Internet. A customer may then purchase tickets for that event from a second client computer which is as well connected to the server computer via Internet.

In the following, the term "event" is used to describe any performance, activity, or resource. An event may be e.g. a conference, a course, a workshop, a festival, a concert, a stage production, etc.

Furthermore, the term "ticket" is used for anything that can ce booked or purchased.

This known ticketing system suffers from the fact, that a supplier can only enter very restricted information which is predefined in its structure, about the event in the database.

This makes the program inflexible and the supplier has almost no degrees of freedom in describing his event.

Furthermore, an object-oriented database is known, e.g. the Oracle™ 8i database. A provider of such a data base may define objects, which are then stored in the object-oriented database.

In [2], there can be found a so called "car generator". With this program, it is possible for a customer, to build a product, in this case a car, via the Internet. This creation takes place step by step by choosing predefined static elements (database objects) of the product. The elements are predefined by the database provider. The chosen objects are stored in the database by the database provider.

This program is inflexible in the respect, that a supplier is not able to put his own offer into the database.

In this context, it should be mentioned that in the invention's scenario, a distinction must be made between three kinds of users of a database:

- a provider of the database,
- a supplier, who wants to sell a product using the database, the supplier not being the same person as the provider of the database,
- a customer, who wants to purchase a product using the database.

Yet, there is no automated system for flexibly defining and purchasing a product via a communication network, e.g. the Internet.

SUMMARY OF THE INVENTION

It is thus an object of the present invention to provide a automated system, a method, and a computer program element for flexibly defining and requesting a product via a communication network.

The object is met with a system, methods, and a computer program element for defining and requesting a product via a communication network with features according to the independent claims.

A system for defining at least one product by a first client computer on at least one server computer and requesting the product by a second client computer, from the server computer, the first client computer and the second client computer being interactively connected to the server computer via a communication network, comprises the following components:

a) an object-oriented database,
b) the server computer comprising an interface which is interactively connected to the object-oriented database, to the first client computer, as well as to the second client computer, the computer server or the interface comprising:

- a means for receiving database objects of the product, which are defined and sent by the first client computer,
- a means for receiving instructions for possibilities of constructing the product including the database objects, which are defined and sent by the first client computer,
- a means for storing the database objects and the corresponding instructions for the product in the object-oriented database,
- a means for creating a requested product according to a request sent from the second client computer, using the database objects and the instructions,
- a means for presenting the requested product to the second client computer.

A method for defining at least one product by a first client computer on at least one server computer and requesting a requested product by a second client computer, from the server computer, the first client computer and the second client computer being interactively connected to the server computer via a communication network, comprises the following steps:

a) defining database objects of the product,
b) defining instructions for possibilities of constructing the product out of the database objects,
c) sending the database objects and the instructions from the first client computer to the the server computer,
d) receiving the database objects and the instructions at the server computer,
e) storing the database objects and the corresponding instructions for the product in an object-oriented database,
f) sending a request message including a request for at least a part of the database objects from the second client computer to the the server computer,
g) receiving the request message at the server computer,
h) creating a requested product including the requested database objects and the stored corresponding instructions,
i) sending a presentation message from the server computer to the second client computer, the presentation message including the requested product.

A method for defining at least one product by a first client computer on at least one server computer and requesting a requested product by a second client computer, from the server computer, the first client computer and the second client computer being interactively connected to the server computer via a communication network, comprises the following steps in the server computer:

a) receiving from the first client computer database objects of the product and instructions for possibilities of constructing the product out of the database objects,
b) storing the database objects and the corresponding instructions for the product in an object-oriented database,
c) receiving from the second client computer a request for at least a part of the database objects,
d) creating a requested product including the requested database objects and the stored corresponding instructions, and
e) sending a presentation of the requested product to the second client computer.

A computer program element which is to intended make the computer execute a procedure comprises the following steps executed in the server computer for defining at least one product by a first client computer on at least one server computer and requesting a requested product by a second client computer, from the server computer, wherein the first client computer and the second client computer being interactively connected to the server computer via a communication network:

a) receiving from the first client computer database objects of the product and instructions for possibilities of constructing the product out of the database objects,
b) storing the database objects and the corresponding instructions for the product in an object-oriented database,
c) receiving from the second client computer a request for at least a part of the database objects,
d) creating a requested product including the requested database objects and the stored corresponding instructions, and
e) sending a presentation of the requested product to the second client computer.

The invention provides a very flexible possibility to define and request a product via a communication network. Thus, a supplier can simply and conveniently define his product by defining database objects and instructions. These instructions are giving information on how the objects can be combined thereby forming a product that the supplier wants to offer. Furthermore, the customer, who enters the database can create exactly the product he individually wants to purchase by combining the stored objects according to the stored instructions. Thus, the invention provides a very flexible tool for a supplier as well as for a customer giving both of them all the advantages resulting from this flexibility, e.g. convenience, individuality in purchasing, and possibly lower prices for the customer, as there can be done a more flexible calculation and more efficient work by the supplier, thus being able to save costs.

A supplier in this context may be anyone who offers a product via a communication network.

Due to the object-oriented approach a high degree of re-usability of the stored database objects for other products and/or even for further suppliers is now achieved.

The invention may be implemented in a programmable computer device as well as with a special electronic circuit.

Preferred embodiments of the invention are claimed in the dependent claims.

The further described embodiments apply not only to the system but also to the methods and the computer program element.

In a preferred embodiment of the invention, the requested product may be purchased via the second client computer.

This achieves a very easy and flexible way for purchasing the offered product.

In a further preferred embodiment a price of the requested product is automatically calculated based upon information included in the stored database objects.

By this embodiment, the flexibility and the comfort of the system is further enhanced, as the supplier e.g. only has to provide price information for the database objects and the price of the requested product is automatically calculated using the price information for the database objects included in the requested product.

The communication network may be the Internet.

Due to this embodiment, a flexible system is provided in one of the most used communication network in the field of electronic commerce.

The database objects may include at least one part of the following information:

a) information about an event,
b) information about a location, where an event will take place,
c) information about a date and/or time, when an event will take place at a location.

By this embodiment and when compared with the tool described in [1] the invention forms a very flexible and improved internet ticket application.

Furthermore, there may be attributes attached to the database objects, especially at least one part of the following information:

a) multimedia information describing the respective database object,
b) price information,
c) advertising information.

This embodiment even further enhances the flexibility and the usability of the invention.

The interface may further be integrated in a world-wide-web browser.

Thus, neither the supplier nor the customer has to have special knowledge about database programming, as they both only need to be able to put information into an internet world-wide-web browser.

BRIEF DESCRIPTION OF THE DRAWING

FIGURE 1   is a schematic diagram of a computer network comprising a server computer and a plurality of client computers showing the interaction of the client computers and the server computer;

FIGURE 2   is a schematic diagram of a computer network comprising a server computer and a plurality of client computers;

FIGURE 3   is a flow diagram showing the messages sent to and from the client computers, the server computer and the object-oriented database;

FIGURE 4   is a schematic diagram of programs organizing different aspects of the system;

FIGURE 5   is a schematic diagram of the computer network comprising a firewall computer, a www server computer, an application server computer and a plurality of client computers showing the interaction of the client computers and the further computers;

FIGURE 6   is a symbolic description about the relation between the database objects according to a preferred embodiment of the invention.

DESCRIPTION OF THE PREFERRED EMBODIMENTS

Preferred embodiments of this invention and modifications thereof will now be described with reference to the accompanying drawings.

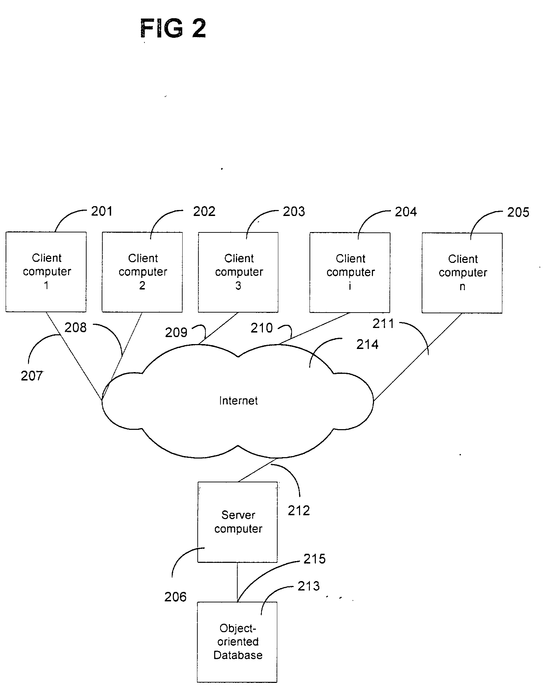

Referring now to **Fig.2,** n client computers 201, 202, 203, 204, 205 (client computer 1, client computer 2, client computer 3, ..., client computer i, ..., client computer *n*) and a Server computer 206 are shown. Each of the computers 201, 202, 203, 204, 205, 206 are connected via a respective telecommunication connection 207, 208, 209, 210, 211, 212 with a communication network 214, the Internet.

Furthermore, an object-oriented database 213 is shown. The object-oriented database 213 is interactively connected to the Server computer 206 via a connection 215.

Each computer 201, 202, 203, 204, 205, 206 comprises at least:

    a) a central processin unit (CPU),
    b) a storage device,
    c) a bus, and
    d) an input-/output-interface.

The central processing unit, the storage device and the input/output-interface are connected with said bus for exchanging electrical signals, respectively.

Each computer 201, 202, 203, 204, 205, 206 may further comprise a display and/or an input device such as a keyboard, a computer mouse, etc. Furthermore, each client computer 201, 202, 203, 204, 205 has installed an internet browser, e.g. the Netscape™ Communicator.

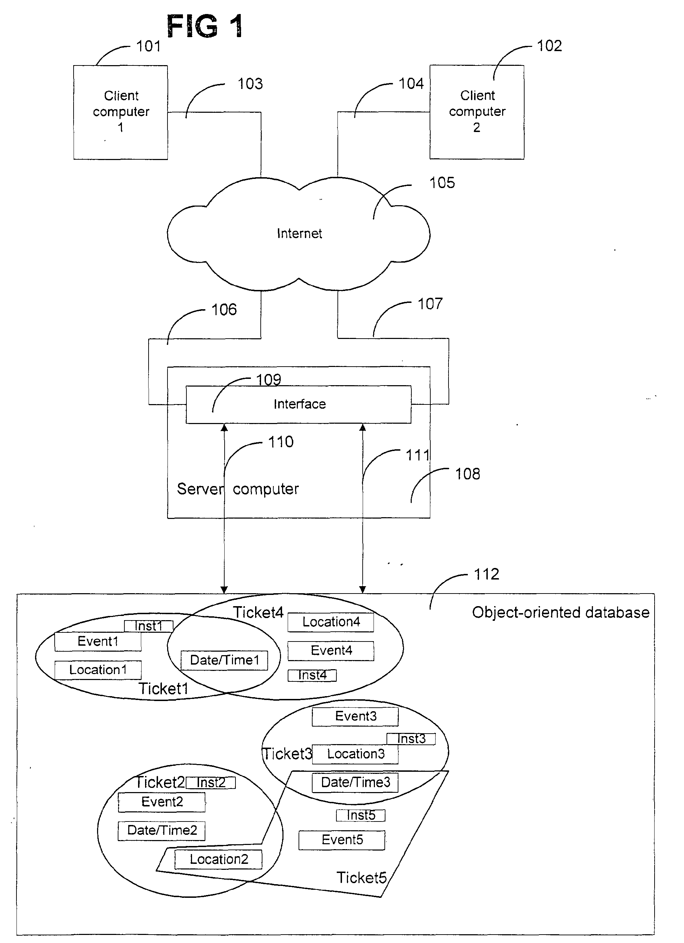

**Fig.1** shows a schematic diagram of the interaction between a first client computer .101 and the server computer 108.

The first client computer 101 is connected via connections 103, 106 and Internet 105 with an interface 109 of the server computer 108.

When a supplier, e.g. a promoter of a music concert, wants to generate tickets which he wants to offer to customers via the server computer 108, in a first step, the supplier establishes a connection using the installed internet browser to join the server computer's 108 homepage.

After having been presented the homepage on the first client computer 101, the supplier is allowed to define database objects and instructions. The instructions provide rules on how a ticket can be built using the supplier's defined database objects.

It is now assumed, that the supplier defines the following database objects:

    a) Event1 (a music concert of pop group A),
    b) Location1 (Olympia stadium in Munich),
    c) Date/Time1 (November 7th, 1999),
    d) Instruction1 (Instl), that is that Eventl takes place in Location1 at Date/Timel.

Furthermore, to the database objects Eventl, Locationl and Date/Timel he attaches price information, i.e. he attaches the information, that the Eventl has a basic price of 10,- DM (costs for pop group A). An event at location1 makes a ticket 10,- DM more expensive (costs for the stadium rent), and an event at Date/Timel always makes a ticket 10% more expensive. Even for a high quality section (in this example, the chosen section is 20% more expensive than the basic section) or a very special seat, there may be special prices.

Now, the automatic calculation of the price for a ticket using the attributes given above, is described. The price P of the ticket for Event1 at Location1 at Date/Timel is in general terms calculated using the following formula:

$$
\begin{aligned}
\text{Ticket Price P} \;=\; & \Big(\big((EP \cdot (1 + PP)) + (LP \cdot (1 + SP))\big) \cdot (1 + QP)\Big) = \\
=\; & \Big(\big((10.-DM \cdot (1 + 0.10)) + (10.-DM \cdot (1 + 0.20))\big) \cdot (1 + 0.25)\Big) = \\
=\; & 28.75 DM
\end{aligned}
$$

In this formula,

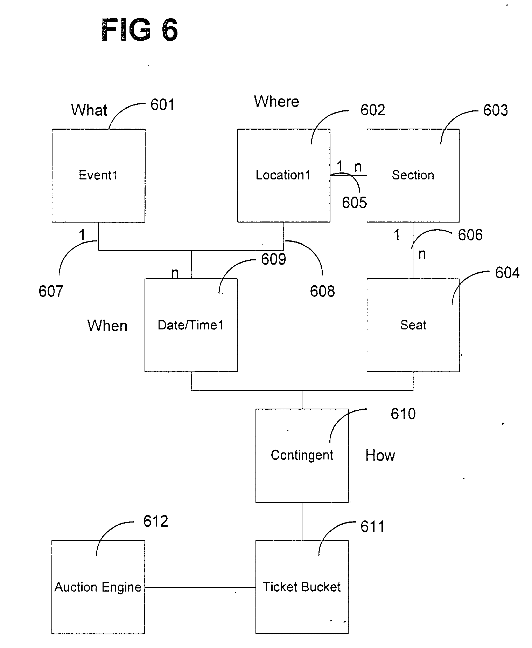

- EP describes the basic price of the event,
- PP describes the price for the Date/Time,
- LP describes the price for the location,
- SP describes the price for the section and/or seat,
- QP describes the supplementary charge (in the above example 25%), resulting e.g. from the profit, the promoter wants to make per ticket, described in **Fig.6** as a contingent 610.

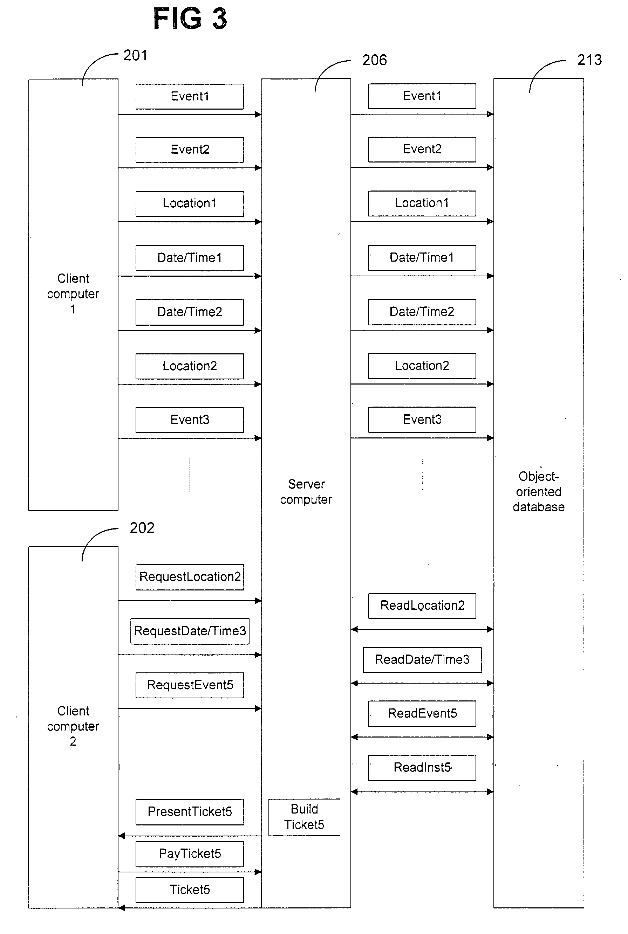

After having defined the database objects, the first client computer 101, 201 sends the database objects Eventl, Locationl, Date/Timel, as well as Inst1 to the server computer 108, 206. In the server computer's 108, 206 interface 109, the database objects are received and then stored in an object-oriented database 112, 213, in this embodiment in the Oracle™ 8i database, therein forming a first ticket Ticket1 (cf. **Fig.3**).

In the database 112, 213, there is already stored a second ticket Ticket2, including the following database objects:

a) Event2 (a football match between team B and team C),
b) Location2 (Olympia stadium in Berlin),
c) Date/Time2 (December, 11th, 1999),
d) Instruction2 (Inst2), that is that Event2 takes place in Location2 at Date/Time2.

Furthermore, there are also stored a third ticket Ticket3, a fourth ticket Ticket4, and a fifth ticket Ticket5.

The third ticket Ticket3 includes the following database objects:

a) Event3,
b) Location3,
c) Date/Time3,
d) Instruction3 (Inst3), that is that Event3 takes place in Location3 at Date/Time3.

The fourth ticket Ticket4 includes the following database objects:

a) Event4,
b) Location4,
c) Date/Timel,
d) Instruction4 (Inst4), that is that Event4 takes place in Location4 at Date/Timel.

As the object Date/Timel is already stored in the database 112 in reference to the fourth ticket Ticket4, this object does not need to be stored again in the database 112, 213, when the first ticket Ticket1 is stored. This re-usability of an object saves a lot of time and resources in the storage device which the database 112, 213 is stored in, especially when there are complex objects with numerous sub-objects included in the respective object. One example of a more complex object is shown in **Fig.6.**

In **Fig.6** there are shown the objects Eventl 601, Locationl 602, Date/Timel 609 and their relations 607, 608, wherein a "1" and an "n" in a relation symbolizes a "1 to many relationship" of the objects. Furthermore, it can be seen, that the object Locationl 602 further comprises a sub-object Section 603, which further comprises (1 to n relation) a sub-object Seat 604.

The re-usability of objects can also be seen from the fifth ticket Ticket5 which includes the following database objects:

a) Event5,
b) Location2,
c) Date/Time3,
d) Instructions (Inst5), that is that Event5 takes place in Location2 at Date/Time3.

In other words, due to the re-usability, the promoter will only have to enter some information once during the creation of the tickets. All subsequent tickets with-an identical location e.g., will be able to use the location information which was entered during the creation of the first set of tickets.

All kinds of objects can be shared in the way described above, for example Events, Locations, Date/Time, etc.

Using this information, the supplier can easily build a whole contingent of tickets he wants to offer for his event. Thus, there are stored many objects in the database, from which tickets can be built according to the respective stored instructions.

In general, the database objects may e.g. have one or more of the following attributes:
Database Object ,,Location", defining where business will be conducted:

a) Name of the place,
b) Picture of the place, building, stadium, etc.,
c) Address of the place, building, stadium, etc.,
d) Directions to the location,
e) Price associated with the use of this location (electricity, permits, etc.), ...

Database Object ,,Event", defining what business will be conducted:

a) Name of the event,
b) Description of the event,
c) Picture of the promoter, a pop group playing at the event, teams joining the event, etc.,
d) Price of the event per person (i.e. e.g. based on food and entertainment costs), ...

Database Object ,,Date/Time", defining when business will be conducted:

a) Time and Date information of product fulfilment,
b) Price associated with conducting business at this date and time.

From this, it should be understood, that the object-oriented approach provides a very flexible and free possibility to define a product (in this embodiment an event, location, Date/Time, thereby forming a ticket).
In this embodiment, the instructions may comprise a set of rules like the following:

a) How many people can participate in the respective event,
b) Profit that will be made (per person),
c) Time and Date to start selling the product (tickets),
d) Time and Date to stop selling the product (tickets), etc.

After the tickets are defined, electronic commerce (e-commerce) activity can be commenced.
Referring now to **Fig.1** and **Fig.3**, the e-commerce part of the system will be described.
A customer, who wants to buy a ticket via the internet 105, 214, uses a second client computer 102, 202 which is connected via connections 104, 105 and Internet 105 with the interface 109 of the server computer 108, 206.
After having entered the server computer's 108, 206 homepage, he is prompted for input of an information, from which the server computer's 108, 206 is able to search in the database 112,213. Thus, the user can input e.g. information about an event, location or a Date/Time desired. Here, the advantage of the object-oriented approach in this ticketing application and the resulting flexibility again becomes obvious, as a search engine of the server computer 108, 206 can search for any object in the database 112, 213 without any problem.
The second client computer 102, 202 sends a request for Location2 (RequestLocation2), i.e. he wants to get information about events, which take place at the Olympia stadium in Berlin.
After having done a search in the data-base 112, 213 (ReadLocation2), the server computer 108, 206 presents information about the second ticket Ticket2 and the fifth ticket Ticket5, as both of them include the object Location2, i.e. they both are tickets for events which take place at the Olympia stadium in Berlin.
The second client computer 102, 202 sends according to the user's choice of the event corresponding to the fifth ticket Ticket5, a request for Date/Time3 (RequestDate/Time3) and Event5 (RequestEvent5).
After having done a search in the database 112, 213 (ReadDate/Time3, ReadEvent5), the server computer 108, 206 builds and presents information about the fifth ticket Tickets to the second client computer 102, 202 (PresentTicket5), as this is the only ticket which can be built according to the instructions in the database 112, 213 and the requested objects. Thus, the server computer 108, 206 is creating the chosen ticket including the requested database objects and the corresponsing instructions from the object-oriented database 112, 213.
In this context, it should be mentioned, that there could be a given amount of tickets of the chosen type available, i.e. there could be a plurality of seats in a section of the location with the same desired attributes, thus enabling the customer to purchase even more than only one ticket with the chosen attributes.
If the user wants to purchase the fifth ticket Ticket5, he pays for the ticket electronically (payTicket5), e.g. by inputting his credit card number and sending it to the server computer 108, 206.
After having received the payment and after having verified the credit card number, the server computer 108, 206 sends the fifth ticket Ticket5 to the second client computer 102, 202.

In the following, alternative embodiments will be described:

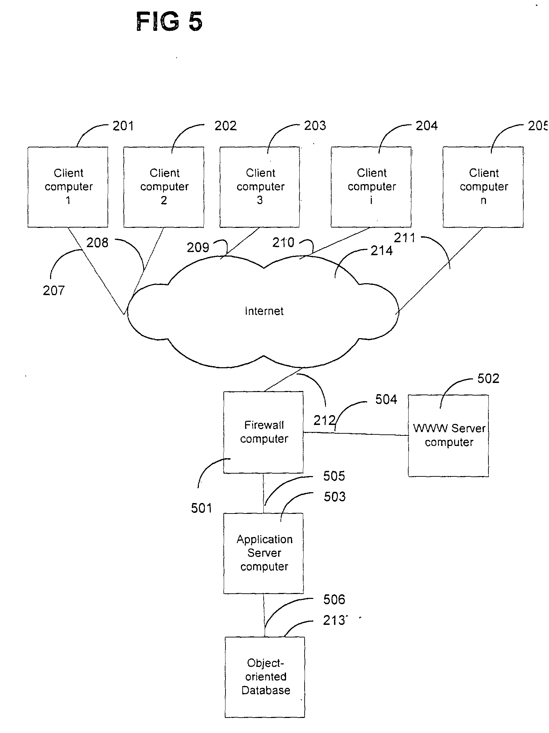

A first alternative to the embodiment described above is shown in **Fig.5. Fig.5** shows an alternative hardware architecture of the system.

In this embodiment, the functionality of the server computer 108, 206 is shared out between three computers, a Firewall computer 501, a World-Wide-Web Server computer 502 (WWW Server computer 502) and an Application server computer 503. The WWW Server computer 502 and the Application server computer 503 are connected to the Firewall computer 501 via connections 504, 505, respectively.

The Firewall computer 501 is connected to the Internet 214. It should be mentioned, that the Firewall computer 501 is the only connection from the three computers 501, 502, 503 to the ,,outer world", i.e. to the Internet 105, 214. This is to make sure that the inner computer networks including the three computers 501, 502, 503 cannot be easily compromised by outside hacker attacks. The Firewall computer 501 uses known firewall mechanisms to ensure the security of the three computers 501, 502, 503. Each message, e.g. request from a client computer is first received by the Firewall computer 501.

Then, the message is forwarded to the WWW Server computer 502, where all the messages are handled. The WWW Server computer 502 e.g. sends the server's homepage to the respective client computer and does all the direct communication with the respective client computer, i.e. the WWW Server computer 502 has all the "Front-End" tasks.

The ,,Back-End" tasks, i.e. the handling of the actual requests like generating, storing, searching database objects and handling the communication with the object-oriented database 213, are fulfilled by the Application server computer 503.

It should be mentioned, that the WWW Server computer 502 and the Application server computer 503 are not connected to each other directly and only communicate with each other via the Firewall computer 501 due to security reasons.

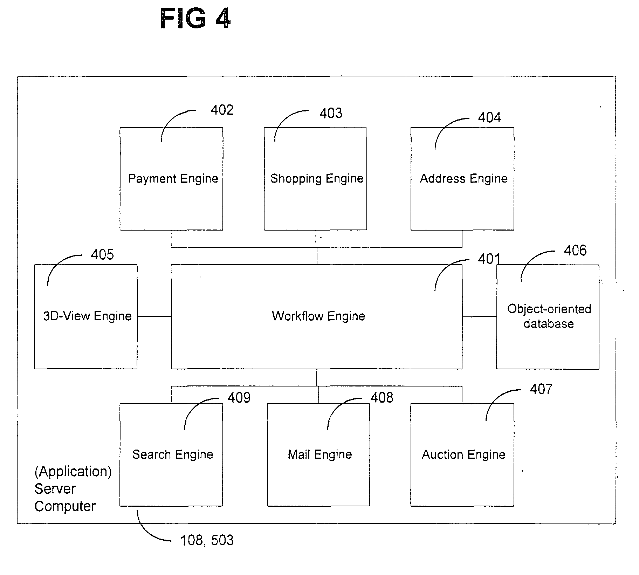

**Fig.4** shows a schematic diagram of programs stored in either the Application server computer 503 or the server computer 108, depending on the embodiment. Parts of these known programs, which are known and are publicly available from [3], comprise a workflow engine 401, a payment engine 402, a shopping engine 403, an address engine 404, an auction engine 407, a mail engine 408, as well as a search engine 409.

Furthermore, a 3D-view engine 405, and the object-oriented database 406 are shown.

The programs, which are available from [3], constitute a basic mechanism for registering, configuring, and organizing customers, products and thus objects in and from the object-oriented database 406.

The tasks fulfilled by the individual engines are as follows:

a) The workflow engine 401 is controlling all interactive processes and the comunnication, i.e. the data flow between the further engines.

b) The payment engine 402 is processing all issues concerned with the payment of a ticket.

c) The shopping engine 403 organizes the communication with the customer, i.e. with the respective client computer, concerning the choice of the ticket.

d) The address engine 404 is responsible for storing and managing all the promoter's and customer's addresses stored in the database.

e) The auction engine 407 is responsible for auction actions, which may be chosen by the promoter for a given amount of tickets he does not want to sell via the ,,normal" predefined process for calculating ticket prices. This further enhances the flexibility of the system.

f) The mail engine 408 is responsible for all issues concerning electronic mail processing.

g) Finally, the search engine 409 organizes searches of database objects from the database 406.

With the 3D-view engine 405 it is possible, to present a 3D- view for example from a chosen seat in the respective chosen location to the customer, thus giving him a ,,What You See Is What You Get"-impression of the ticket he potentially wants to purchase.

The auction engine 612 is also shown in Fig.6, where the separation of tickets which are given into the ticket bucket 611 for auctioning, is symbolized.

It should further be emphasized, that the invention is not restricted to ticket sales, but can very easily be used in defining, creating and building any kind of product which comprises objects which are to be combined in a flexible way according to flexibly defined instructions.

Furthermore, there may be rules to describe the detailed construction of the product and/or the price.

As there may be many clients acting as suppliers, the objects may furthermore be "shared objects", which may be used by each supplier for his own tasks, thus enhancing the flexibility and the re-usability of the system and its components.

In this context, the following scenario should be considered. There are numerous promoters who want to sell different products which have partially common objects, although they are different products. For example, if a first supplier has defined and created his product (first product P1) including five database objects (objl, obj2, obj3, obj4, obj5) and a set of instructions giving rules on how his product P1 can be created.

A second supplier wants to offer his own unique product, a second product P2. The second product comprises 4 objects, including 2 objects, which are the same as in the first product P1, i.e. obj2 and obj4. Furthermore, the second product P2 comprises two further objects obj5, obj6, which are defined by the second supplier. Due to the object-oriented approach according to the invention, it is now possible that the second supplier tries to get the allowance to share the objects obj2 and obj4 from the first supplier, who has already defined those objects. Thus, the re-usability aspect in a complex network with many suppliers is increased immensely, thus saving a lot of time and money. This situation can be expanded to any number of suppliers and to any number of shared objects.

In a further alternative, the following steps can be taken, if a customer requests at least one product, which has not been stored and thus offered in the database 112.

If the result of the search is that the request for a product has to be rejected, all information about the rejected request is noted. Thus, there are counters attached to the stored objects, which are incremented each time that the respective object is requested. Furthermore, the counters could as well be incremented each time, when the respective object is requested, even when the requested product can be created.

Having noted the number of requests, a statistical analysis on the counters is done. The easiest way for this analysis is to find those objects with the highest number of requests on the respective object.

This result is then presented to the supplier(s), who subsequently can find out which new product (combination of the objects) may be interesting for the customers due to the amount of the requests for the objects.

Of course, any statistical analysis can be used to find promising products which may be offered.

In this document, the following publications are cited:

[1] Product description of the computer program ACTEVA, accessible on November, 6th, 1999 via Internet under the address:
http:\\www.tixtogo.com

[2] Car generator program,
accessible on November, 6th, 1999 via Internet under the address:
http:\\www.bmw.de -> Car Generator

[3] abaXX Technology GmbH, represented in the Internet on November, 6th, 1999 under the address:
http:\\abaXX.com

## Claims

1. A system for defining at least one product by a first client computer (101) on at least one server computer (108) and requesting the product by a second client computer (102), from the server computer (108),
   the first client computer (101) and the second client computer (102) being interactively connected to the server computer (108) via a communication network (105),
   comprising the following components:

   a) an object-oriented database (112),
   b) the server computer (108) comprising an interface (109) which is interactively connected to the object-oriented database (112), to the first client computer (101), as well as to the second client computer (102), the computer server (108) or the interface (109) comprising:

   - a means for receiving database objects of the product, which are defined and sent by the first client computer (101),
   - a means for receiving instructions for possibilities of constructing the product including the database objects, which are defined and sent by the first client computer (101),
   - a means for storing the database objects and the corresponding instructions for the product in the object-oriented database (112),
   - a means for creating a requested product according to a request sent from the second client computer, using the database objects and the instructions,
   - a means for presenting the requested product to the second client computer.

**EP 1 104 905 A1**

**2.** A system according to claim 1,
further comprising a means for purchasing the requested product via the second client computer.

**3.** A system according to claim 1 or 2,
further comprising a means for automatically calculating the price of the requested product based upon information included in the stored database objects.

**4.** A system according to one of the preceding claims, wherein the communication network is the Internet.

**5.** A system according to one of the preceding claims, wherein the database objects include at least one part of the following information:

    a) information about an event,
    b) information about a location, where an event will take place,
    c) information about a date and/or time, when an event will take place at a location.

**6.** A system according to one of the preceding claims, wherein there are attributes attached to the database objects, especially at least one part of the following information:

    a) multimedia information describing the respective database object,
    b) price information,
    c) advertising information.

**7.** A system according to one of the preceding claims, wherein the interface is integrated in a world-wide-web browser

**8.** A method for defining at least one product by a first client computer on at least one server computer and requesting a requested product by a second client computer, from the server computer,
the first client computer and the second client computer being interactively connected to the server computer via a communication network,
comprising the following steps:

    a) defining database objects of the product,
    b) defining instructions for possibilities of constructing the product out of the database objects,
    c) sending the database objects and the instructions from the first client computer to the the server computer,
    d) receiving the database objects and the instructions at the server computer,
    e) storing the database objects and the corresponding instructions for the product in an object-oriented database,
    f) sending a request message including a request for at least a part of the database objects from the second client computer to the the server computer,
    g) receiving the request message at the server computer,
    h) creating a requested product including the requested database objects and the stored corresponding instructions,
    i) sending a presentation message from the server computer to the second client computer, the presentation message including the requested product.

**9.** A method for defining at least one product by a first client computer on at least one server computer and requesting a requested product by a second client computer, from the server computer,
the first client computer and the second client computer being interactively connected to the server computer via a communication network,
comprising the following steps in the server computer:

    a) receiving from the first client computer database objects of the product and instructions for possibilities of constructing the product out of the database objects,
    b) storing the database objects and the corresponding instructions for the product in an object-oriented database,
    c) receiving from the second client computer a request for at least a part of the database objects,
    d) creating a requested product including the requested database objects and the stored corresponding instructions, and

10

e) sending a presentation of the requested product to the second client computer.

**10.** A computer program element which is intended to make the computer execute a procedure comprising the following steps executed in the server computer for defining at least one product by a first client computer on at least one server computer and requesting a requested product by a second client computer, from the server computer, wherein the first client computer and the second client computer being interactively connected to the server computer via a communication network:

a) receiving from the first client computer database objects of the product and instructions for possibilities of constructing the product out of the database objects,

b) storing the database objects and the corresponding instructions for the product in an object-oriented database,

c) receiving from the second client computer a request for at least a part of the database objects,

d) creating a requested product including the requested database objects and the stored corresponding instructions, and

e) sending a presentation of the requested product to the second client computer.

# FIG 1

# FIG 2

# FIG 3

201  206  213

**Client computer 1**

| Event1 |
| Event2 |
| Location1 |
| Date/Time1 |
| Date/Time2 |
| Location2 |
| Event3 |

**Server computer**

| Event1 |
| Event2 |
| Location1 |
| Date/Time1 |
| Date/Time2 |
| Location2 |
| Event3 |

**Object-oriented database**

202

**Client computer 2**

| RequestLocation2 |
| RequestDate/Time3 |
| RequestEvent5 |

| ReadLocation2 |
| ReadDate/Time3 |
| ReadEvent5 |
| ReadInst5 |

| PresentTicket5 | Build Ticket5 |
| PayTicket5 |
| Ticket5 |

# FIG 4

# FIG 5

# FIG 6

What ⌒ 601

Where ⌒ 602  ⌒ 603

Event1

Location1     Section

1  n
⌒
605

1
1  ⌒ 606
607      n

⌒ 609
n
When     Date/Time1          Seat
608

⌒ 604

Contingent     How  ⌒ 610

⌒ 612  ⌒ 611

Auction Engine     Ticket Bucket

# EP 1 104 905 A1

**European Patent Office**

## EUROPEAN SEARCH REPORT

**Application Number**

EP 99 12 0982

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | "About Acteva, The Marketplace for Activities" HTTP://WWW.TIXTOGO.COM, 'Online! 6 November 1999 (1999-11-06), pages 1-2, XP002135047 Retrieved from the Internet: <URL:http://www.acteva.com/about/overview.cfm> 'retrieved on 2000-04-06! * the whole document * | 1-4,7-10 | G06F17/60 |
| Y | WO 95 27255 A (REGAN TIMOTHY ;WILSON JEREMY (GB); FREESTONE DAVID (GB); BRITISH T) 12 October 1995 (1995-10-12) * abstract; figures 3,4 * * page 3, line 18 - page 4, line 17 * | 1-4,7-10 | |
| A | US 5 956 720 A (FLORESCU DANIELA DINA ET AL) 21 September 1999 (1999-09-21) * abstract; figure 1 * * column 2, line 23 - line 41 * | 1,8-10 | |
| A | US 5 333 257 A (MERRILL WILLIAM E ET AL) 26 July 1994 (1994-07-26) * abstract; figures 12-15 * * column 1, line 5 - line 33 * | 1,8-10 | **TECHNICAL FIELDS SEARCHED** (Int.Cl.7) G06F |
| A | WO 98 35311 A (DELORME PUBLISHING COMPANY INC) 13 August 1998 (1998-08-13) * abstract; figures 1A,2-4 * * page 2, line 6 - page 3, line 32 * * page 10, line 6 - page 11, line 29 * -/-- | 1,8-10 | |

The present search report has been drawn up for all claims

| Place of search | Date of completion of the search | Examiner |
|---|---|---|
| THE HAGUE | 7 April 2000 | van der Weiden, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

18

| | | European Patent Office | **EUROPEAN SEARCH REPORT** | **Application Number** EP 99 12 0982 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BARTA R A ET AL: "JESSICA: an object-oriented hypermedia publishing processor"<br>COMPUTER NETWORKS AND ISDN SYSTEMS,NL,NORTH HOLLAND PUBLISHING. AMSTERDAM,<br>vol. 30, no. 1-7,<br>1 April 1998 (1998-04-01), pages 281-290, XP004121419<br>ISSN: 0169-7552<br>* abstract *<br>* page 283, left-hand column - page 86, left-hand column *<br>* page 288, left-hand column *<br>--- | 1,8-10 | |
| A | US 5 634 016 A (STEADHAM JR CHARLES V ET AL) 27 May 1997 (1997-05-27)<br>* abstract *<br>* column 1, line 3 - column 2, line 43 *<br>----- | 1,8-10 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 7 April 2000 | van der Weiden, A |

**ANNEX TO THE EUROPEAN SEARCH REPORT
ON EUROPEAN PATENT APPLICATION NO.**                    EP 99 12 0982

This annex lists the patent family members relating to the patent documents cited in the above–mentioned European search report.
The members are as contained in the European Patent Office EDP file on
The European Patent Office is in no way liable for these particulars which are merely given for the purpose of information.

07-04-2000

| Patent document cited in search report | | Publication date | Patent family member(s) | | Publication date |
|---|---|---|---|---|---|
| WO 9527255 | A | 12-10-1995 | SG | 43130 A | 17-10-1997 |
| | | | AU | 700455 B | 07-01-1999 |
| | | | AU | 2080095 A | 23-10-1995 |
| | | | CA | 2186626 A | 12-10-1995 |
| | | | EP | 0753179 A | 15-01-1997 |
| | | | US | 5943657 A | 24-08-1999 |
| US 5956720 | A | 21-09-1999 | WO | 9835305 A | 13-08-1998 |
| US 5333257 | A | 26-07-1994 | NONE | | |
| WO 9835311 | A | 13-08-1998 | US | 5948040 A | 07-09-1999 |
| US 5634016 | A | 27-05-1997 | NONE | | |

EPO FORM P0459

For more details about this annex : see Official Journal of the European Patent Office, No. 12/82